# EUROPEAN PATENT APPLICATION

(11) **EP 0 990 808 A2**
(43) Date of publication of application: **05.04.2000**
(21) Application number: 99119396.2
(22) Date of filing: 29.09.1999
(51) Int. Cl.: F16B 37/06, B29C 65/44

(54) **Metalic insert member, receiving member for the insert member and method for fixing the insert member**

(30) Priority: 30.09.1998 JP 29130398
(71) Applicant: MATSUSHITA ELECTRIC INDUSTRIAL CO., LTD., Kadoma-shi, Osaka-fu 571 (JP)
(72) Inventor: Koyashiki, Takayoshi, Sendai-shi, Miyagi 989 (JP); Inomata, Yoji, Yokohama-shi, Kanagawa 246 (JP); Nagaike, Syotaro, Yokohama-shi, Kanagawa 223-0053 (JP)
(74) Representative: Grünecker, Kinkeldey, Stockmair & Schwanhäusser Anwaltssozietät

(57) **Abstract**

In order to insert an outsert metal member (1) into a receiving member (2) made of resin, the outsert metal member (1) is heated through a jig (6) and then inserted into the receiving member in a state where the outsert metal member is provisionally fixed to the jig (6) which is heated to such a degree that the receiving member made of resin can be melted sufficiently, for example. Grooves (3-1) and projections (4) are provided so as to oppose to each other. Projections (4) melt during the process of inserting the outsert metal member after the tip ends of the projections (4) interfere with the end portions of the grooves (3-1). When the outsert metal member is further inserted, the melted projection of the receiving member (2) made of resin moves out of the grooves (3-1) or a groove (3-2) and flows into a space between the outer diameter portion of the outsert metal member (1) and the inner diameter portion of the receiving member (2) made of resin. The melted resin thus flown does not move on the outward appearance surface of the receiving member, and the outsert metal member (1) can be firmly fixed to the receiving member (2) made of resin when the resin solidifies.

## Description

### BACKGROUND OF THE INVENTION

### 1. Field of the Invention

The present invention relates to a method for fixing a metal member wherein, in the case of inserting an insertion part (outsert metal member) made of metal into an inserted part (a receiving member) made of resin, the receiving member mad of resin melts at the mutual interfering portion between the insertion part and the inserted part. In particular, the present invention relates to the method for fixing the metal member wherein the metal member can be firmly fixed in a state where the metal member is positioned and the outward appearance of the receiving member is little influenced in a state where the insertion member has been inserted therein.

### 2. Description of the Related Art

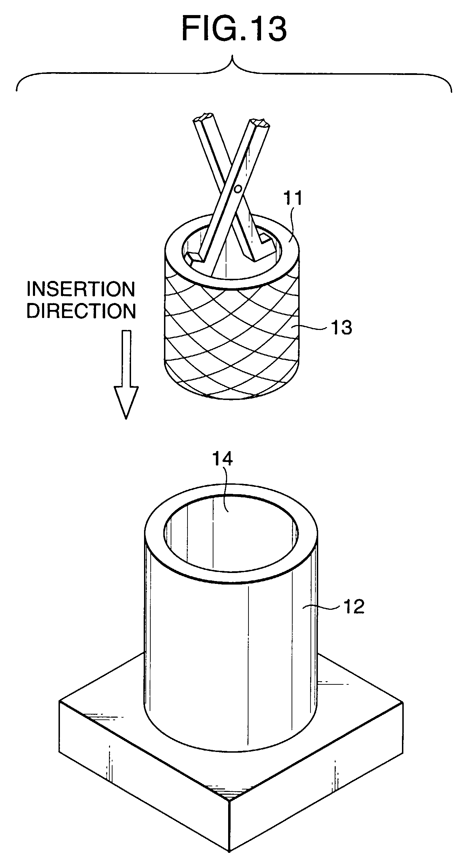

Conventionally, as a method of later mounting process used frequently in the case of inserting the outsert metal member into the receiving member made of resin while melting the receiving member made of resin, there is a method as shown in Fig. 13 wherein meshed knurls 13 are formed on the outer portion of an outsert metal member 11 and the outsert metal member 11 thus formed is inserted into a lower hole 14 provided at a receiving member 12 made of resin provided in advance, for example.

In this configuration, the maximum outer diameter of the outsert metal member 11 is designed so as to be larger than the inner diameter of the lower hole 14 provided at the receiving member 12 made of resin. Thus, when the outsert metal member 11 is inserted into the lower hole 14 while being heated by a heater, for example, the inner wall of the inner diameter portion of the lower hole of the receiving member 12 made of resin melts at the interfering portion of the outsert metal member and the receiving member due to the difference in size between the maximum outer diameter of the outsert metal member 11 and the inner diameter of the lower hole of the receiving member 12 made of resin, and so the inner wall of the inner diameter portion of the lower hole thus melted moves into the recesses of the meshed knurls 13 provided at the outsert metal member 11 and solidifies. As a result, the outsert metal member can be fixed to the receiving member.

As another means for fixing an inserted part made of resin (receiving member) in the insertion process, there is employed a method wherein an outsert metal member is inserted into the receiving member made of resin in the later mounting process thereby to form both the outsert metal member and the receiving member made of resin as a single part. Such a method is frequently employed since a cost for providing a die is cheaper as compared with a so called insert integration molding method requiring an expensive die wherein an outsert metal member and a receiving member made of resin are formed as an integration molding structure in a die integration molding process.

However, the aforesaid conventional method wherein the outsert metal member having the meshed knurls is inserted into the receiving member made of resin while heating the outsert metal member has a problem that the intensity for preventing the outsert metal member from coming out and rotating after the integration process is generally degraded as compared with the so called insert integration molding method wherein the outsert metal member and the receiving member made of resin are formed as the integration molding structure in the die integration molding process.

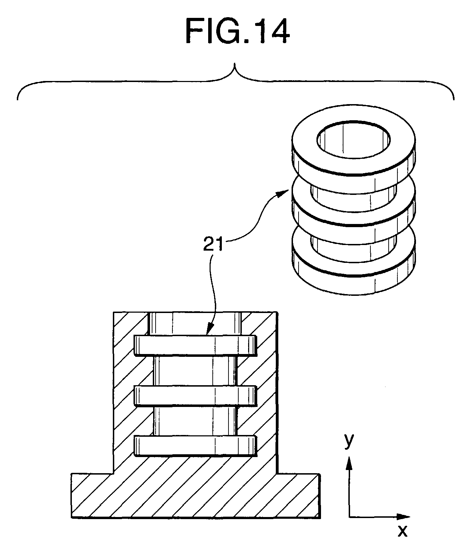

This is because, as compared with the outsert metal member having the knurls which is inserted in the later mounting process shown in Fig. 13, for example, as shown in Fig. 14, an outsert metal member 21 used in the insert integration molding method can be provided in advance with deep step portions capable of resisting against the coming-out force toward y-axis direction and so the resin of the receiving member can be come into the deep step portions sufficiently. In contrast, in the outsert metal member having the knurls which is inserted in the later mounting process shown in Fig. 13, even if deep step portions may be provided, it is impossible to sufficiently move the resin of the receiving member into the step portions since the outsert metal member is inserted in the later mounting process.

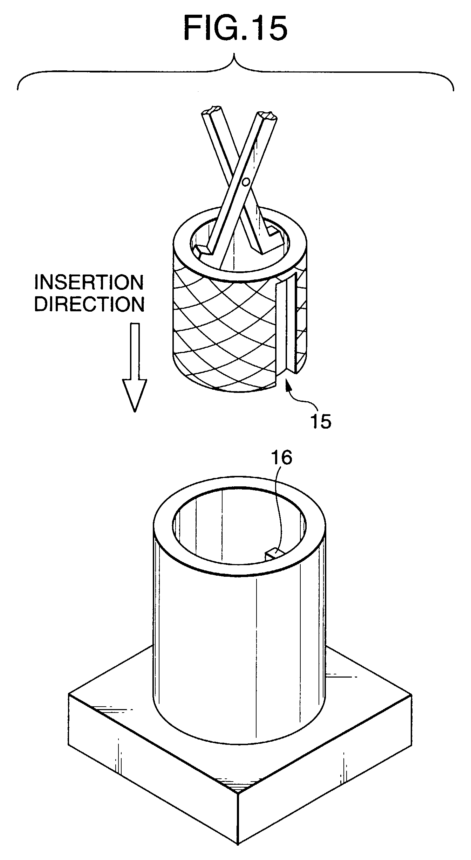

The knurls used in the conventional examples has functions for preventing the outsert metal member from coming out and rotating after the inserting process, but the knurls does not has a function of positioning the parts by itself. Thus, as one of methods for providing the outsert metal member having the knurls used in the conventional example with the positioning function, for example, there is a method shown in Fig. 15 wherein a groove 15 is formed at an outsert metal member having knurls and a projection 16 is provided at the inner wall of the lower hole of a receiving member made or resin so that the groove 15 and the projection 16 do not interfere to each other and serve as a positioning means in a manner that a space between the groove 15 and the projection 16 is small. However, in such a method, the groove 15 and the projection 16 do not have an ability of improving the come-out preventing effect.

Further, in the conventional method wherein the outsert metal member having the knurls is inserted into the receiving member made of resin while heating the outsert metal member, when the thickness of the outer wall of the lower hole for insertion of the receiving member made of resin is thin, there sometimes arises a case that the heat applied to the entire area of the inner wall after the insertion process transmits to the outer wall and so the outward appearance of the receiving member is badly influenced.

### SUMMARY OF THE INVENTION

An object of the present invention is to obviate the aforesaid conventional problem and to provide, in a later mounting method of inserting an outsert metal member into a receiving member made of resin while melting the resin of the receiving member made of resin at the interfering portion therebetween, an excellent metal member fixing method which can maintain rigid fixing intensity, has a positioning function and little influence the outward appearance of the receiving member made of resin in a state where the outsert metal member has been inserted therein.

In order to solve the aforesaid problems, the metal member fixing method according to the present invention is arranged in a manner that, in a method for inserting an outsert metal member into a receiving member made of resin and fixing the outsert metal member to the receiving member, wherein the outsert metal member has at least one groove extending along an insertion direction of the metal member into the receiving member and has at least one another groove crossing with the at least one groove with a predetermined angle therebetween, wherein the receiving member is provided with at least one projection at an inner wall of an insertion hole thereof so as to correspond to the at least one groove provided along the insertion direction of the metal member, and wherein the projection provided at the receiving member interferes at least with the at least one another groove crossing with the at least one groove with the predetermined angle and is melted in a process of passing through the at least one groove of the metal member so that the metal member is fixed to the receiving member.

The first aspect of the present invention is arranged in a manner that, in a method for inserting an outsert metal member into a receiving member made of resin and fixing the outsert metal member to the receiving member, wherein the outsert metal member has at least one groove extending along an insertion direction of the metal member into the receiving member and has at least one another groove crossing with the at least one groove with a predetermined angle therebetween, wherein the receiving member is provided with at least one projection at an inner wall of an insertion hole thereof so as to correspond to the at least one groove provided along the insertion direction of the metal member, and wherein the projection provided at the receiving member interferes at least with the at least one another groove crossing with the at least one groove with the predetermined angle and is melted in a process of passing through the at least one groove of the metal member so that the metal member is fixed to the receiving member. Accord to such a method, it is possible to attain such a technical effect that the metal member can be prevented from being rotated and coming out of the receiving member after being inserted into the receiving member, and the metal member can be easily positioned at the time of assembling. Further, even if the outer wall of the lower hole of the receiving member made of resin for inserting the metal member therein is thin, such a possibility can be made small that the melted resin spread over the entire portion of the inner wall after the insertion of the metal member spreads to the outer wall of the receiving member to degrade the outward appearance of the receiving member.

The second aspect of the present invention is arranged, in the method of the first aspect, in a manner that the method comprises a step of, as at least one method of melting the projection of the receiving member at a time of inserting the metal member into the receiving member, inserting the metal member into the receiving member while heating the metal member to melt the projection of the receiving member interfering with the metal member thereby to fix the metal member to the receiving member. According to such a method, the metal member can be fixed to the receiving member by using such a simple method of heating the outsert metal member as a method of melting the projection of the receiving member made of resin.

The third aspect of the present invention is arranged, in the method of the first aspect or the second aspect, in a manner that the method comprises a step of, as at least one method of melting the projection of the receiving member at a time of inserting the metal member into the receiving member, inserting the metal member into the receiving member while vibrating the metal member by using ultrasonic to melt the projection of the receiving member interfering with the metal member thereby to fix the metal member to the receiving member. According to such a method, the metal member can be fixed to the receiving member by using such a simple method of vibrating the outsert metal member by using ultrasonic as a method of melting the projection of the receiving member made of resin.

The fourth aspect of the present invention is arranged, in the method of one of the first aspect to the third aspect, in a manner that the method comprises a step of, as at least one method of melting the projection of the receiving member at a time of inserting the metal member into the receiving member, applying a chemical agent or solvent having a component for melting resin on one of or both the metal member and the receiving member and then inserting the metal member into the receiving member to melt the projection of the receiving member interfering with the metal member thereby to fix the metal member to the receiving member. According to such a method, the metal member can be fixed to the receiving member by using such a simple method of using a chemical agent or solvent having a component capable of melting the resin.

The fifth aspect of the present invention is arranged, in the method of one of the first aspect to the fourth aspect, in a manner that a part or the entire portion of the at least one groove extending along the insertion direction of the metal member is slanted relative to the insertion direction. According to such a method, such an effect of preventing the outsert metal member from coming out of the receiving member made of resin can be improved.

The sixth aspect of the present invention is arranged, in the method of one of the first aspect to the fifth aspect, in a manner that step portions are provided at a part or an entire portion of the at least one groove extending along the insertion direction of the metal member. According to such a method, such an effect of preventing the outsert metal member from coming out of the receiving member made of resin can be improved.

The seventh aspect of the present invention is arranged, in the method of one of the first aspect to the sixth aspect, in a manner that fine step portions are provided at a part or an entire portion of the another groove which crosses with the predetermine angle with the at least one groove extending along the insertion direction of the metal member. According to such a method, such an effect of preventing the outsert metal member from rotating and coming out of the receiving member made of resin can be improved.

The eighth aspect of the present invention is arranged, in the method of one of the first aspect to the seventh aspect, in a manner that knurls are provided on an outer peripheral portion of the metal member. According to such a method, such an effect of preventing the outsert metal member from rotating with respect to the receiving member made of resin can be improved.

The ninth aspect of the present invention is arranged, in the method of one of the first aspect to the eighth aspect, in a manner that outer diameter of a tip end portion along the insertion direction of the metal member is made thinner to form a step portion, and a groove extending along the insertion direction of the metal member is provided at the not-thinned outer diameter portion in a manner that the groove extends between the step portions as boundaries each locating between the thinned outer diameter portion and the not-thinned outer diameter portion. According to such a method, the melted resin of the receiving member made of resin can be prevented from spreading to a not-intended portion.

The tenth aspect of the present invention is arranged, in the method of one of the first aspect to the ninth aspect, in a manner that the metal member is formed in a manner that a D-shaped portion is removed therefrom. According to such a method, positioning effect of the metal member with respect to the receiving member made of resin can be improved and further such an effect of preventing the outsert metal member from rotating with respect to the receiving member made of resin can be improved.

The eleventh aspect of the present invention is arranged in a manner that an outsert metal member is characterized by comprising at least one groove extending along an insertion direction of the metal member into a receiving member and at least one another groove crossing with the at least one groove with a predetermined angle therebetween. According to such an arrangement, such an effect of preventing the outsert metal member from coming out of the receiving member made of resin can be improved.

The twelfth aspect of the present invention is arranged, in the outsert metal member arrangement of the eleventh aspect, in a manner that a part or an entire portion of the at least one groove extending along the insertion direction of the metal member is slanted relative to the insertion direction. According to such an arrangement, such an effect of preventing the outsert metal member from coming out of the receiving member made of resin can be improved.

The thirteenth aspect of the present invention is arranged, in the outsert metal member arrangement of the eleventh aspect, in a manner that step portions are provided at a part or an entire portion of the at least one groove extending along the insertion direction of the metal member. According to such an arrangement, such an effect of preventing the outsert metal member from coming out of the receiving member made of resin can be improved.

The fourteenth aspect of the present invention is arranged, in the outsert metal member arrangement of the eleventh aspect, in a manner that fine step portions are provided at a part or an entire portion of the another groove which crosses with the predetermine angle with the at least one groove extending along the insertion direction of the metal member. According to such an arrangement, such an effect of preventing the outsert metal member from coming out of the receiving member made of resin can be improved.

The fifteenth aspect of the present invention is arranged, in the outsert metal member arrangement of the eleventh aspect, in a manner that knurls are provided on an outer peripheral portion of the metal member. According to such an arrangement, positioning effect of the metal member with respect to the receiving member made of resin can be improved and further such an effect of preventing the outsert metal member from rotating with respect to the receiving member made of resin can be improved.

The sixteenth aspect of the present invention is a receiving member made of resin in which the outsert metal member according to the eleventh aspect to the fifteenth aspect is inserted, which is arranged to comprise at least one projection provided at an inner wall of an insertion hole of the receiving member so as to correspond to the at least one groove extending along the insertion direction of the metal member which is inserted into the receiving member. According to such an arrangement, positioning effect of the metal member with respect to the receiving member made of resin can be improved and further such an effect of preventing the outsert metal member from rotating with respect to the receiving member made of resin can be improved.

The seventeenth aspect of the present invention is a portable communication unit characterized in that the metal member fixing method according to one of the first aspect to the tenth aspect is applied to a screw part provided at a casing of the portable communication unit. According to such an arrangement, in a screw part provided at the casing of the portable communication unit, positioning effect of the metal member with respect to the receiving member made of resin can be obtained and further such an effect of preventing the outsert metal member from rotating with respect to the receiving member made of resin can be obtained

The eighteenth aspect of the present invention is a portable communication unit characterized in that the metal member fixing method according to one of the first aspect to the tenth aspect is applied to a screw for fixing an antenna exposed outward of the portable communication unit. According to such an arrangement, in a screw part for fixing the antenna exposed outward of the portable communication unit, positioning effect of the metal member with respect to the receiving member made of resin can be obtained and further such an effect of preventing the outsert metal member from rotating with respect to the receiving member made of resin can be obtained

The present disclosure relates to the subject matter contained in Japanese patent application No. Hei. 10-291303 (filed on September 30, 1998) which is expressly incorporated herein by reference in its entirely.

### BRIEF DESCRIPTION OF THE DRAWINGS

Fig. 1 is a perspective view for explaining the metal member fixing method according to a first embodiment of the present invention.
Fig. 2A is a sectional schematic diagram showing a state just before an outsert metal member is inserted.
Fig. 2B is a sectional schematic diagram showing a state just before a projection melts.
Fig. 2C is a sectional schematic diagram showing a state where the projection is being melted.
Fig. 2D is a sectional schematic diagram showing a state where the melted projection moves out of a groove.
Fig. 3 is a perspective view showing another configuration of the arrangement used in the metal member fixing method according to the first embodiment of the present invention.
Fig. 4 is a schematic diagram showing an example of the configuration of a groove having slanted portions which can attain further effective coming-out prevention effect, according to a second embodiment of the present invention.
Fig. 5 is a schematic diagram showing a state where a projection of a receiving member made of resin melts within the groove having the slanted portions which can attain the further effective coming-out prevention effect, according to the second embodiment of the present invention.
Fig. 6 is a schematic diagram showing an example of the configuration of the arrangement wherein step portions are provided at a part or the entire portion of a groove extending along the insertion direction of an outsert metal member, according to a third embodiment of the present invention.
Fig. 7 is a schematic diagram showing an example of the configuration of the arrangement wherein fine step portions are provided at a part or the entire portion of another groove which crosses with a predetermine angle with a groove extending along the insertion direction of an outsert metal member, according to a fourth embodiment of the present invention.
Fig. 8 is a schematic diagram showing an example of the configuration of the arrangement wherein meshed knurls are provided on the outer peripheral portion of an outsert metal member, according to a fifth embodiment of the present invention.

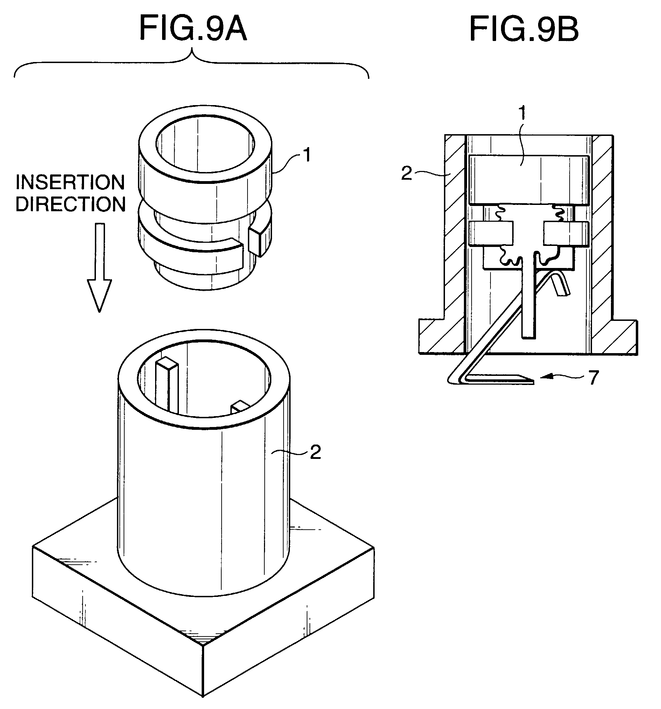

Figs. 9A and 9B are schematic diagrams showing an example of the configuration of the arrangement wherein the outer diameter of the tip end portion along the insertion direction of an outsert metal member is made thinner to form a step portion, and a groove extending along the insertion direction of the outsert metal member is provided at the not-thinned outer diameter portion in a manner that the groove extends between the step portions as boundaries each locating between the thinned outer diameter portion and the not-thinned outer diameter portion, according to a sixth embodiment of the present invention.
Fig. 10 is a schematic diagram showing an example of the configuration of the arrangement wherein an outsert metal member is formed in a manner that a D-shaped portion is removed therefrom, according to a seventh embodiment of the present invention.
Fig. 11 is a schematic diagram showing another example of the configuration of the arrangement wherein the outsert metal member is formed in a manner that a D-shaped portion is removed therefrom, according to the seventh embodiment of the present invention.
Fig. 12 is a schematic diagram showing an example of the configuration of a casing wherein the metal member fixing methods according to the present invention is employed in screw parts for fixing an antenna exposed outward of a portable communication unit such as a PHS, a portable telephone or the like.
Fig. 13 is a perspective view showing an example of a conventional method for fixing a metal member in a later process.
Fig. 14 is a schematic diagram showing an insert integration molding structure and an example of the sectional configuration of the arrangement used in the conventional method for fixing a metal member in a later process.
Fig. 15 is a schematic diagram showing an example of the arrangement wherein a projection and a groove for positioning are provided in the conventional method for fixing a metal member in a later process.

### DETAILED DESCRIPTION OF THE PREFERRED EMBODIMENTS

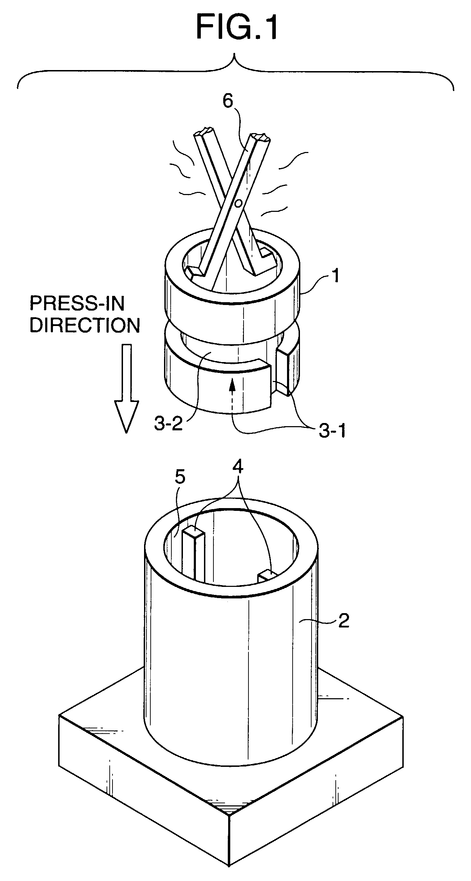

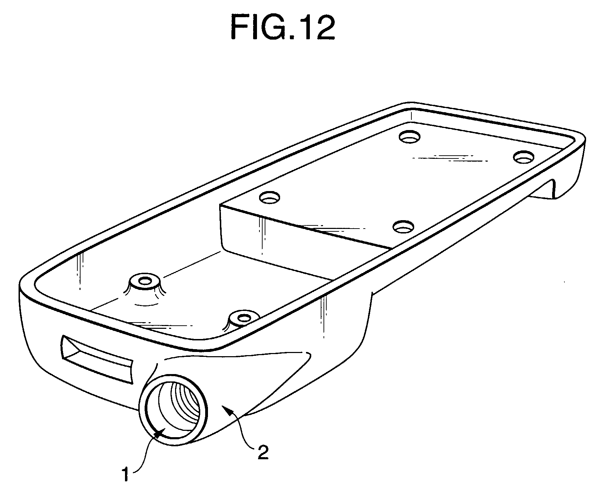

Embodiments of the present invention will be described with reference to Figs. 1 to 12.

### (First embodiment)

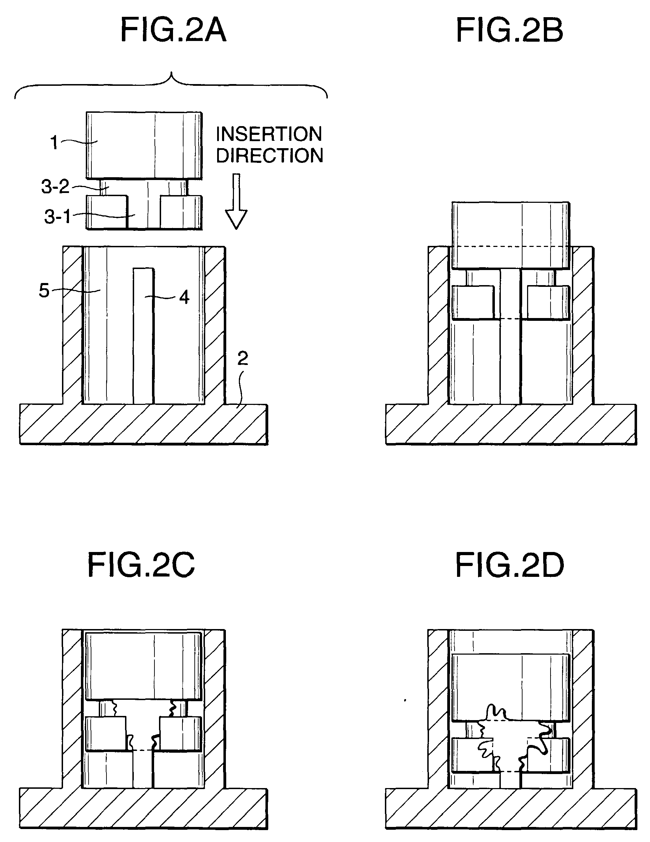

The basic concept of a method of fixing a metal member according to the first embodiment of the present invention will be explained with reference to Fig. 1 and Figs. 2A to 2D. It will be understood that Fig. 1 and Figs. 2A to 2D merely show an example for explaining the basic concept of the present invention.

In Fig. 1, an outsert metal member 1 is inserted into a receiving member 2 made of resin. In the insertion process, in order to insert the outsert metal member 1 into the receiving member 2 made of resin, the outsert metal member 1 is heated through a jig 6 and then inserted into the receiving member in a state where the outsert metal member is provisionally fixed to the jig 6 which is heated to such a degree that the receiving member made of resin can be melted sufficiently, for example. Grooves 3-1 and projections 4 are provided so as to oppose to each other so that the groove and the projection may not interfere to each other at the initial stage of the insertion of the outsert metal member.

Figs. 2A to 2D are schematic transversal sectional diagrams showing the changes of the insertion process of the metal member in the present invention. Fig. 2A shows a state just before the outsert metal member is inserted. Fig. 2B shows a moment where the tip end of the projection interferes with the groove on the way of the insertion process. Fig. 2C shows a state where the projections 4 melt during the process of inserting the outsert metal member after the tip ends of the projections 4 interfere with the end portions of the grooves 3-1. In other word, the figure shows a state where the melted projection of the receiving member made of resin moves into a groove 3-2 which crosses with the groove provided along the insertion direction.

Fig. 2D shows a state where, when the outsert metal member is further inserted, the melted projection of the receiving member 2 made of resin moves out of the grooves 3-1 or the groove 3-2 and flows into a space between the outer diameter portion of the outsert metal member 1 and the inner diameter portion of the receiving member 2 made of resin. The melted resin thus flown does not move on the outward appearance surface of the receiving member, and the outsert metal member 1 can be firmly fixed to the receiving member 2 made of resin when the resin solidifies.

In the melting process according to the present invention, it will be understood that the melting process of the projection 4 may not be continued to the state where the melted resin moves out of the groove as shown in Fig. 2D, and the insertion process may be stopped in the level shown in Fig. 2C so long as a metal member fixing method satisfying the coming-out preventing intensity, rotation preventing intensity and other predetermined designs can be obtained at the level.

Although Fig. 1 shows as an example the arrangement in which the numbers of the grooves 3-1, the groove 3-2 and the projections 4 are two, one and two, respectively, these numbers may be changed in accordance with the various cases depending on the design of the products. Further, these elements are not required to be disposed oppositely on diagonal lines.

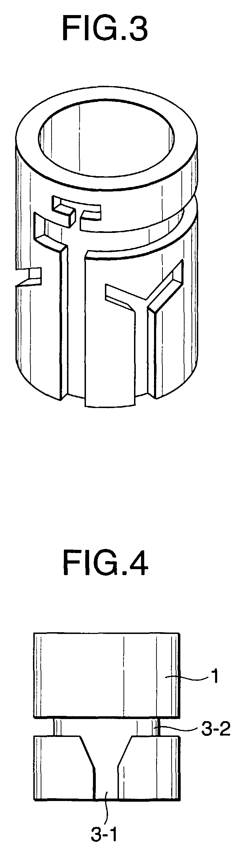

Further, although in the arrangement of Fig.1, the grooves 3-1 and the groove 3-2 are arranged so as to cross with an angle of 90 degrees therebetween, these grooves may be arranged so as to cross with an angle other than 90 degrees. For example, the outsert metal member may be designed in a manner that the groove 3-2 is provided in a multi-stage fashion as shown in Fig. 3 so that this groove cross with the grooves 3-1 in a V-shape manner. In this manner, the metal member fixing method may be determined in various fashions by taking into consideration of the coming-out prevention effect, the rotation prevention effect and the positioning effect.

### (Second embodiment)

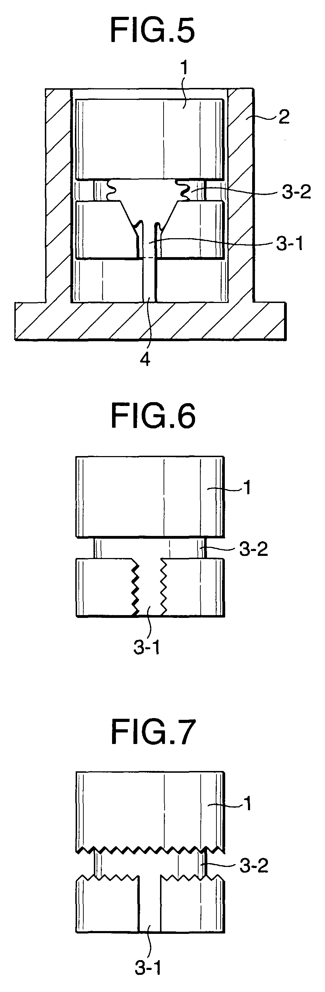

Figs. 4 and 5 are diagrams for explaining the metal member fixing method according to the second embodiment of the present invention, which shows an example wherein a part of the groove extending along the insertion direction of the outsert metal member 1 is slanted relative to the insertion direction. Since the groove is provided with the slanted portion as shown in Fig. 4, the groove 3-1 can attain more stronger coming-out prevention effect in addition to the coming-out prevention effect resulted from the close contact of the melted resin to the outsert metal member.

### (Third embodiment)

Fig. 6 is a diagram for explaining the metal member fixing method according to the third embodiment of the present invention, which shows an example wherein fine step portions are provided at a part or the entire portion of the groove extending along the insertion direction of the outsert metal member 1. Since the groove is provided with the fine step portions as shown in Fig. 6, the groove 3-1 can attain more stronger coming-out prevention effect in addition to the coming-out prevention effect resulted from the close contact of the melted resin to the outsert metal member. Although each of these fine step portions in the example of Fig. 6 is formed in a notched shape, such a shape is merely an example of the configuration of the step portions. For example, each of these fine step portions may be formed in a diamond-cut shape, or may be roughly surface finished intentionally.

### (Fourth embodiment)

Fig. 7 is a diagram for explaining the metal member fixing method according to the fourth embodiment of the present invention, which shows an example wherein fine step portions are provided at a part or the entire portion of another groove which crosses with a predetermine angle with the groove extending along the insertion direction of the outsert metal member 1. Since the another groove is provided with the fine step portions as shown in Fig. 7, the groove 3-2 can attain more stronger coming-out prevention effect in addition to the coming-out prevention effect resulted from the close contact of the melted resin to the outsert metal member. Although each of these fine step portions in the example of Fig. 7 is formed in a notched shape, such a shape is merely an example of the configuration of the step portions. For example, each of these fine step portions may be formed in a diamond-cut shape, or may be roughly surface finished intentionally.

### (Fifth embodiment)

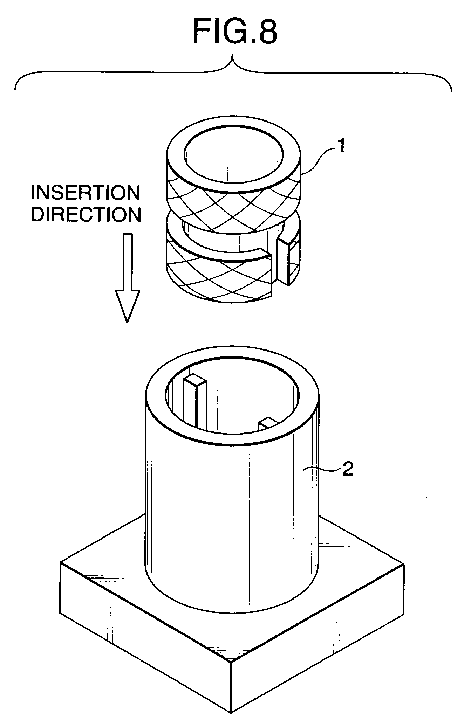

Fig. 8 is a diagram for explaining the metal member fixing method according to the fifth embodiment of the present invention, which shows an example wherein meshed knurls are provided on the outer peripheral portion of the outsert metal member. Since the outsert metal member is provided with the meshed knurls as shown in Fig. 8, the outsert metal member can attain the more stronger coming-out prevention effect and the improved rotation prevention effect. In order to attain the object for providing the meshed knurls, the outer peripheral portion of the outsert metal member 1 and the inner diameter portion of the receiving member 2 interfere to each other at the portion of the meshed knurls. According to such a configuration, although the degree of influence of the melted resin existing in the space between the outsert metal member 1 and the receiving member 2 made of resin which affects the outward appearance of the receiving member may become larger, the coming-out prevention effect and the rotation prevention effect also become larger.

In this embodiment, even if the outsert metal member is not provided with the meshed knurls, so long as the embodiment is arranged in a manner that the outer peripheral portion of the outsert metal member and the inner diameter portion of the received member interfere to each other, the rotation prevention effect and the coming-out prevention effect can be improved as compared with the arrangement where they do not interfere to each other. Of course, if the arrangement of the first embodiment is applied to such an arrangement, the more stronger coming-out prevention effect and the improved rotation prevention effect can be attained.

### (Sixth embodiment)

Fig. 9A is a diagram for explaining the metal member fixing method according to the sixth embodiment of the present invention, which shows an example wherein the outer diameter of the tip end portion along the insertion direction of the outsert metal member is made thinner to form a step portion, and a groove extending along the insertion direction of the outsert metal member is provided at the not-thinned outer diameter portion in a manner that the groove extends between the step portions as boundaries each locating between the thinned outer diameter portion and the not-thinned outer diameter portion. Since the thinned outer diameter portion is provided as shown in Fig. 9A, even in the case where the melted resin moves out of the lower portion of the groove when the outsert metal member 1 is inserted into the receiving member, the bottom surface of the outsert metal member 1 can not be interfered with the melted resin. Therefore, in the case of providing another part at the bottom surface of the outsert metal member 1, for example, in the case of providing a contact spring terminal 7 contacting to the bottom surface of the outsert metal member 1 as shown in Fig. 9B, this another part can be prevented from being interfered with the melted resin.

### (Seventh embodiment)

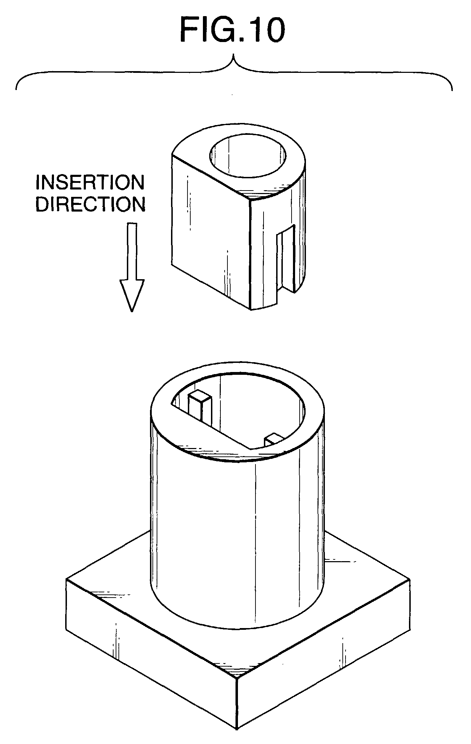

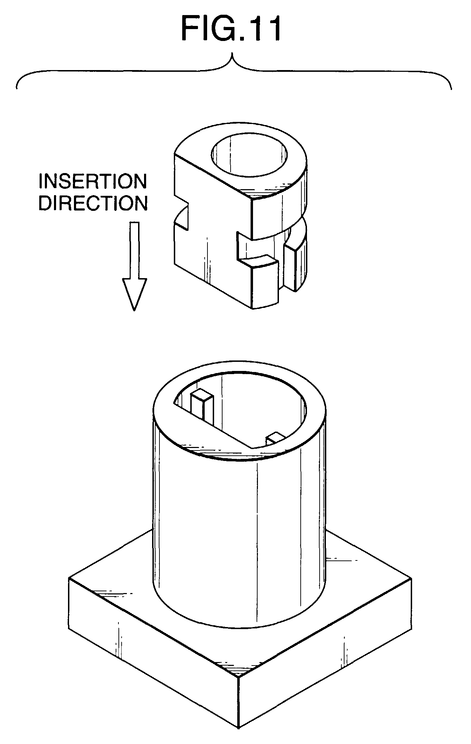

Figs. 10 and 11 are diagrams for explaining the metal member fixing method according to the seventh embodiment of the present invention, each of which shows an example wherein the outsert metal member is formed in a manner that a D-shaped portion is removed therefrom. In the case where a space between the groove 3 of the outsert metal member 1 and the projection 4 of the receiving member 2 made of resin is required to be made large due to the restriction on the design, for example, the rotation prevention effect and the positioning effect in the metal member fixing method using the groove 3 and the projection 4 may be insufficient. However, in this embodiment, since the outsert metal member is formed in a manner that the D-shaped portion is removed therefrom as shown in Figs. 10 and 11, the degradation of such effects can be compensated. Of course, in this embodiment, the lower hole of the receiving member made of resin is formed in a manner that a D-shaped portion is removed therefrom or another-shaped portion is removed therefrom so that the substantially same effect as the removal of the D-shaped portion can be performed.

Although the explanation has been made as to the configurations using the metal member fixing methods according to the first to seventh embodiments of the present invention, such configurations can be used as screw parts provided at the casing of a portable communication unit such as a PHS (personal handyphone system), a portable telephone or the like. Further, such configurations can be used as screw parts for fixing an antenna exposed outward of a portable communication unit such as a PHS, a portable telephone or the like.

As described above, according to the present invention, the metal member fixing method according to the present invention is arranged in a manner that, in a method for inserting an outsert metal member into a receiving member made of resin and fixing the outsert metal member to the receiving member, wherein the outsert metal member has at least one groove extending along an insertion direction of the metal member into the receiving member and has at least one another groove crossing with the at least one groove with a predetermined angle therebetween, wherein the receiving member is provided with at least one projection at an inner wall of an insertion hole thereof so as to correspond to the at least one groove provided along the insertion direction of the metal member, and wherein the projection provided at the receiving member interferes at least with the at least one another groove crossing with the at least one groove with the predetermined angle and is melted in a process of passing through the at least one groove of the metal member so that the metal member is fixed to the receiving member. Thus, the present invention can attain such an effect that, in the metal member fixing method employing a later mounting method of inserting an outsert metal member into a receiving member made of resin while melting the resin of the receiving member made of resin at the interfering portion therebetween, rigid fixing intensity can be maintained, a positioning function can be obtained and the outward appearance of the receiving member made of resin is little influenced in a state where the outsert metal member has been inserted therein.

## Claims

1. A metal member fixing method for inserting an outsert metal member into a receiving member made of resin and fixing said outsert metal member to said receiving member, wherein said outsert metal member has at least one groove extending along an insertion direction of said metal member into said receiving member and has at least one another groove crossing with said at least one groove with a predetermined angle therebetween, wherein said receiving member is provided with at least one projection at an inner wall of an insertion hole thereof so as to correspond to said at least one groove provided along the insertion direction of said metal member, and wherein said projection provided at said receiving member interferes at least with said at least one another groove crossing with said at least one groove with the predetermined angle and is melted in a process of passing through said at least one groove of said metal member so that said metal member is fixed to said receiving member.

2. A metal member fixing method as claimed in claim 1, comprises a step of, as at least one method of melting said projection of said receiving member at a time of inserting said metal member into said receiving member, inserting said metal member into said receiving member while heating said metal member to melt said projection of said receiving member interfering with said metal member thereby to fix said metal member to said receiving member.

3. A metal member fixing method as claimed in claim 1 or 2, comprises a step of, as at least one method of melting said projection of said receiving member at a time of inserting said metal member into said receiving member, inserting said metal member into said receiving member while vibrating said metal member by using ultrasonic to melt said projection of said receiving member interfering with said metal member thereby to fix said metal member to said receiving member.

4. A metal member fixing method as claimed in one of claims 1 to 3, comprises a step of, as at least one method of melting said projection of said receiving member at a time of inserting said metal member into said receiving member, applying a chemical agent or solvent having a component for melting resin on one of or both said metal member and said receiving member and then inserting said metal member into said receiving member to melt said projection of said receiving member interfering with said metal member thereby to fix said metal member to said receiving member.

5. A metal member fixing method as claimed in one of claims 1 to 4, wherein a part or an entire portion of said at least one groove extending along the insertion direction of said metal member is slanted relative to the insertion direction.

6. A metal member fixing method as claimed in one of claims 1 to 5, wherein step portions are provided at a part or an entire portion of said at least one groove extending along the insertion direction of said metal member.

7. A metal member fixing method as claimed in one of claims 1 to 6, wherein fine step portions are provided at a part or an entire portion of said another groove which crosses with the predetermine angle with said at least one groove extending along the insertion direction of said metal member.

8. A metal member fixing method as claimed in one of claims 1 to 7, wherein knurls are provided on an outer peripheral portion of said metal member.

9. A metal member fixing method as claimed in one of claims 1 to 8, wherein outer diameter of a tip end portion along the insertion direction of said metal member is made thinner to form a step portion, and a groove extending along the insertion direction of said metal member is provided at the not-thinned outer diameter portion in a manner that said groove extends between said step portions as boundaries each locating between the thinned outer diameter portion and the not-thinned outer diameter portion.

10. A metal member fixing method as claimed in one of claims 1 to 9, wherein said metal member is formed in a manner that a D-shaped portion is removed therefrom.

11. An outsert metal member characterized by comprising at least one groove extending along an insertion direction of said metal member into a receiving member and at least one another groove crossing with said at least one groove with a predetermined angle therebetween.

12. An outsert metal member as claimed in claim 11, wherein a part or an entire portion of said at least one groove extending along the insertion direction of said metal member is slanted relative to the insertion direction.

13. An outsert metal member as claimed in claim 11, wherein step portions are provided at a part or an entire portion of said at least one groove extending along the insertion direction of said metal member.

14. An outsert metal member as claimed in claim 11, wherein fine step portions are provided at a part or an entire portion of said another groove which crosses with the predetermine angle with said at least one groove extending along the insertion direction of said metal member.

15. An outsert metal member as claimed in claim 11, wherein knurls are provided on an outer peripheral portion of said metal member.

16. A receiving member made of resin in which said outsert metal member as claimed in claims 11 to 15 is inserted, comprising at least one projection provided at an inner wall of an insertion hole of said receiving member so as to correspond to said at least one groove extending along the insertion direction of said metal member which is inserted into said receiving member.

17. A portable communication unit characterized in that said metal member fixing method as claimed in one of claims 1 to 10 is applied to a screw part provided at a casing of said portable communication unit.

18. A portable communication unit characterized in that said metal member fixing method as claimed in one of claims 1 to 10 is applied to a screw for fixing an antenna exposed outward of said portable communication unit.
